# EUROPÄISCHE PATENTSCHRIFT

(11) **EP 1 262 856 B1**
(45) Veröffentlichungstag und Bekanntmachung des Hinweises auf die Patenterteilung: **23.01.2008**
(21) Anmeldenummer: 02011115.9
(22) Anmeldetag: 18.05.2002
(51) Int. Cl.: G06F 21/02, G06F 12/14

(54) **Programmgesteuerte Einheit**
Program controlled unit
Unité contrôlée par programme

(30) Priorität: 29.05.2001 DE 10126281
(43) Veröffentlichungstag der Anmeldung: 04.12.2002
(73) Patentinhaber: Infineon Technologies AG, 81669 München (DE)
(72) Erfinder: Barrenscheen, Jens, Dr., 81669 München (DE)
(74) Vertreter: Repkow, Ines

(56) Entgegenhaltungen:
- EP-A- 0 661 642
- EP-A- 0 694 828
- WO-A-00/08558
- US-A- 5 251 304
- US-A- 5 557 743
- US-A- 5 721 877
- US-A- 5 737 760
- US-A- 5 826 007

## Beschreibung

Die vorliegende Erfindung betrifft eine Vorrichtung gemäß dem Oberbegriff des Patentanspruchs 1.

Programmgesteuerte Einheiten wie beispielsweise Mikroprozessoren, Mikrocontroller, Signalprozessoren etc. sind seit vielen Jahren in unzähligen Ausführungsformen bekannt und bedürfen keiner näheren Erläuterung.

Programmgesteuerte Einheiten mit Leseschutzeinrichtungen werden eingesetzt, wenn verhindert werden soll, daß innerhalb der programmgesteuerten Einheit gespeicherte Daten oder Programme ausgelesen und aus der programmgesteuerten Einheit ausgegeben werden. Dies ist erforderlich, wenn es sich bei den Daten oder Programmen um geheime Daten oder Programme handelt, die - aus welchem Grund auch immer - nicht in die Hände von unberechtigten Personen gelangen sollen oder dürfen.

Die Leseschutzeinrichtungen unterbinden verständlicherweise nicht jegliches Auslesen von Daten aus der zu schützenden Speichereinrichtung, sondern werden nur aktiv,
- wenn der Benutzer der programmgesteuerten Einheit wünscht, daß das Auslesen der zu schützenden Speichereinrichtung beschränkt wird, und
- wenn ein Ereignis aufgetreten ist, nach welchem die Gefahr besteht, daß ein Hacker Daten aus der Speichereinrichtung auslesen könnte.

Die erste Bedingung, d.h. ob der Leseschutz bei Erfüllung der zweiten Bedingung aktiviert werden soll oder nicht, wird durch das von der programmgesteuerten Einheit ausgeführte Programm, genauer gesagt durch die Ausführung eines oder mehrerer bestimmter Befehle eingestellt.

Die zweite Bedingung, d.h. die Überwachung des Auftretens eines Ereignisses, nach welchem die Gefahr besteht, daß ein Hacker Daten aus der Speichereinrichtung auslesen könnte, wird als erfüllt angesehen, wenn die programmgesteuerte Einheit die von ihr auszuführenden Befehle aus einer außerhalb der programmgesteuerten Einheit vorgesehenen Speichereinrichtung holt. Die Überwachung des Auftretens dieser Bedingung erfolgt durch eine Überprüfung der Adressen, von welchen die von der programmgesteuerten Einheit ausgeführten Befehle geholt werden.

Auf diese Art und Weise kann jedoch nicht zuverlässig ausgeschlossen werden, daß Hacker den Inhalt einer zu schützenden Speichereinrichtung auslesen können.

Dies ist beispielsweise der Fall, wenn die programmgesteuerte Einheit nach dem Einschalten einen Bootstrap Loader ausführt, durch welchen aus einer außerhalb der programmgesteuerten Einheit vorgesehenen Speichereinrichtung Befehle repräsentierende Daten in die programmgesteuerte Einheit eingelesen werden, und diese Befehle zu einem späteren Zeitpunkt, genauer gesagt nach einem durch den Bootstrap Loader veranlaßten Rücksetzen der programmgesteuerten Einheit ausgeführt werden. Bei der Ausführung der durch den Bootstrap Loader in die programmgesteuerten Einheit geladenen Befehle werden diese nämlich aus einer innerhalb der programmgesteuerten Einheit vorgesehenen Speichereinrichtung geholt, so daß, obgleich diese Befehle letztlich von außerhalb der programmgesteuerten Einheit stammen und durch einen Hacker manipuliert sein können, die vorstehend genannte zweite Bedingung nicht als erfüllt angesehen wird. Die Folge ist, daß ein Hacker durch das vom Bootstrap Loader in die programmgesteuerte Einheit geladene Programm den vor unberechtigten Zugriffen zu schützenden Speicher auslesen kann.

Ein Auslesen des vor unberechtigten Zugriffen zu schützenden Speichers ist ferner möglich, wenn die programmgesteuerte Einheit über ein OCDS-Modul (On Chip Debug Support Modul) verfügt, welches in der Lage ist, Befehle zur Ausführung bringen zu lassen (beispielsweise Befehle in die Instruction Queue zu injizieren). Auch in diesem Fall können von außerhalb der programmgesteuerten Einheit stammende Befehle zur Ausführung kommen, ohne daß die vorstehend genannte zweite Bedingung als erfüllt angesehen wird.

Eine weitere programmgesteuerte Einheit mit Leseschutzeinrichtung ist in Dokument US-A-5 737 760 beschrieben. Die in der US-A-5 737 760 beschriebene programmgesteuerte Einheit ist eine programmgesteuerte Einheit gemäß dem Oberbegriff des Patentanspruchs 1. Auch diese programmgesteuerte Einheit bietet keinen komplett sicheren Leseschutz.

Der vorliegenden Erfindung liegt daher die Aufgabe zugrunde, eine Möglichkeit zu finden, durch welche das Auslesen einer Speichereinrichtung durch dazu nicht befugte Personen unter allen Umständen zuverlässig verhindert werden kann.

Diese Aufgabe wird erfindungsgemäß durch die in Patentanspruch 1 beanspruchte programmgesteuerte Einheit gelöst.

Dadurch, daß die Sperrkennung nicht mehr abhängig von der Adresse gesetzt wird, von welcher die programmgesteuerte Einheit die jeweils auszuführenden Befehle holt, sondern abhängig von der Betriebsart, in welcher sich die programmgesteuerte Einheit befindet, kann das Auslesen von Daten aus der zu schützenden Speichereinrichtung auch in Phasen verhindert werden, die durch die bekannten Leseschutzeinrichtungen nicht als kritisch erkannt werden können.

Die zu schützende Speichereinrichtung kann dadurch zuverlässiger und sogar einfacher vor einem unberechtigten Auslesen geschützt werden.

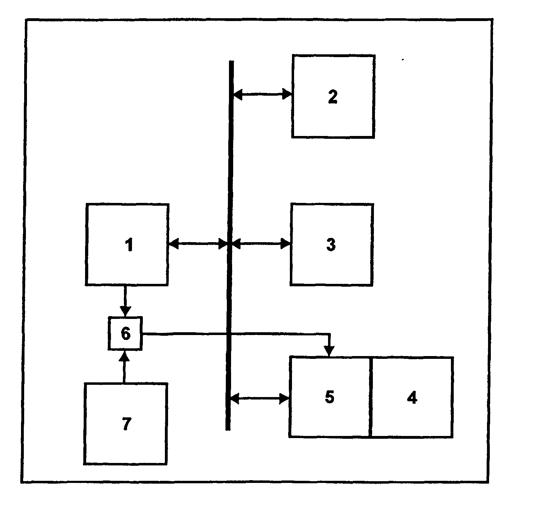

Vorteilhafte Weiterbildungen der Erfindung sind den Unteransprüchen, der folgenden Beschreibung, und der Figur entnehmbar.

Die Erfindung wird nachfolgend anhand eines Ausführungsbeispiels unter Bezugnahme auf die Figur näher erläutert.

Die Figur zeigt den prinzipiellen Aufbau der im folgenden näher beschriebenen programmgesteuerten Einheit.

Bei der im folgenden beschriebenen programmgesteuerten Einheit handelt es sich um einen Mikrocontroller. Es sei jedoch bereits an dieser Stelle darauf hingewiesen, daß sich die nachfolgend beschriebenen Besonderheiten auch bei anderen programmgesteuerten Einheiten, beispielsweise bei Mikroprozessoren oder Signalprozessoren einsetzen lassen.

Der vorliegend betrachtete Mikrocontroller hat den in der Figur gezeigten Aufbau. Der Vollständigkeit halber sei darauf hingewiesen, daß nur die vorliegend besonders interessierenden Bestandteile des Mikrocontrollers gezeigt sind und beschrieben werden.

Der in der Figur gezeigte Mikrocontroller enthält eine CPU 1, ein ROM 2, ein RAM 3, einen Flashspeicher 4, eine dem Flashspeicher 4 vorgeschaltete Flashspeicher-Steuereinrichtung 5, eine Sperrkennungs-Speichereinrichtung 6, und eine Sperrkennungs-Einstelleinrichtung 7.

Der Speicher, dessen Auslesen durch nicht befugte Personen verhindert werden soll, ist der Flashspeicher 4. Es könnte sich aber auch um einen anderen nichtflüchtigen oder flüchtigen Speicher der programmgesteuerten Einheit handeln.

Die Leseschutzeinrichtung, durch welche das unberechtigte Auslesen des Flashspeichers 4 unterbunden wird, ist im betrachteten Beispiel Bestandteil der Flashspeicher-Steuereinrichtung 5, könnte prinzipiell aber auch in einer beliebigen anderen Komponente des Mikrocontrollers untergebracht sein.

Die Leseschutzeinrichtung arbeitet, wie später noch genauer beschrieben wird, abhängig
- von einer in der Flashspeicher-Steuereinrichtung 5 gespeicherten Leseschutzkennung, und
- von einer in der Sperrkennungs-Speichereinrichtung 6 gespeicherten Sperrkennung
wobei, wie später ebenfalls noch genauer beschrieben wird,
- die Leseschutzkennung durch den Benutzer der programmgesteuerten Einheit (durch das Anwendungsprogramm) gesetzt und zurückgesetzt wird,
- die Sperrkennung automatisch von der programmgesteuerten Einheit in Abhängigkeit von der Betriebsart, in welcher sich die programmgesteuerte Einheit befindet, gesetzt wird oder nicht, und
- das Auslesen des Flashspeichers 4 verhindert wird, wenn sowohl die Leseschutzkennung als auch die Sperrkennung gesetzt sind.

Die Flashspeicher-Steuereinrichtung 5 enthält im betrachteten Beispiel neben der Leseschutzeinrichtung auch noch eine Schreibschutzeinrichtung, durch welche ein unberechtigtes Beschreiben des Flashspeichers 4 unterbunden wird. Dadurch soll verhindert werden, daß ein Hacker die im Flashspeicher 4 gespeicherten Programme oder Daten verändern kann. Der Vollständigkeit halber sei jedoch darauf hingewiesen, daß das Vorhandensein der Schreibschutzeinrichtung keine Voraussetzung für das Vorsehen der Leseschutzeinrichtung ist. In bestimmten Fällen wird auch gar keine Schreibschutzeinrichtung benötigt. Dies ist beispielsweise der Fall, wenn es sich bei dem zu schützenden Speicher um ein ROM handelt.

Im Flashspeicher 4 ist neben den eigentlich zu speichernden, d.h. neben für die Anwendung der programmgesteuerten Einheit benötigten (Anwendungs-)Programmen und/oder Daten, noch eine Reihe von Kennwörtern gespeichert.

Diese Kennwörter umfassen im betrachteten Beispiel
- ein im folgenden als erstes Leseschutz-Kennwort bezeichnetes Kennwort, auf dessen Eingabe hin die Leseschutzkennung gesetzt wird,
- ein im folgenden als zweites Leseschutz-Kennwort bezeichnetes Kennwort, auf dessen Eingabe hin die Leseschutzkennung zurückgesetzt wird, und
- ein im folgenden als Schreibschutz-Kennwort bezeichnetes Kennwort, das eingegeben werden muß, um den Flashspeicher 4 Daten einschreiben zu können.

Die Kennwörter werden im betrachteten Beispiel vom Benutzer bei der ersten Inbetriebnahme der programmgesteuerten Einheit eingegeben und im Flashspeicher 4 gespeichert. Dies wird im betrachteten Beispiel durch ein Programm oder einen Programmteil bewerkstelligt, das in einem nichtflüchtigen Speicher der programmgesteuerten Einheit gespeichert ist und bei der ersten Inbetriebnahme der programmgesteuerten Einheit ausgeführt wird. Das betreffende Programm bzw. der betreffende Programmteil kann aber auch in einem außerhalb der programmgesteuerten Einheit vorgesehenen Speicher gespeichert sein (und beispielsweise durch einen Bootstrap Loader geladen und zur Ausführung gebracht werden).

Die Kennwörter müssen nicht im Flashspeicher 4 gespeichert werden; sie können auch in einer anderen nichtflüchtigen Speichereinrichtung der programmgesteuerten Einheit gespeichert werden. Unabhängig davon, wo die Kennwörter gespeichert sind, sollten diese nicht oder jedenfalls nicht auf Veranlassung durch unberechtigte Personen aus der programmgesteuerten Einheit ausgebbar sein.

Das Schreibschutz-Kennwort wird von der Schreibschutzvorrichtung benötigt, um zu überprüfen, ob dem Flashspeicher 4 oder der Flashspeicher-Steuereinrichtung 5 zugeführte Daten in den Flashspeicher 4 eingeschrieben werden dürfen. Damit dem Flashspeicher 4 oder der Flashspeicher-Steuereinrichtung 5 zugeführte Daten in den Flashspeicher 4 eingeschrieben werden können, muß der Flashspeicher-Steuereinrichtung 5 vorher das Schreibschutz-Kennwort zugeführt werden. Die Flashspeicher-Steuereinrichtung 5 vergleicht das ihr zugeführte Schreibschutz-Kennwort mit dem im Flashspeicher 4 gespeicherten Schreibschutz-Kennwort und läßt ein Beschreiben oder Umprogrammieren des Flashspeichers 4 nur zu, wenn die miteinander verglichenen Kennwörter übereinstimmen. Im betrachteten Beispiel ist der Schreibschutz immer aktiv und muß für jeden Schreibvorgang aufgehoben werden.

Die Leseschutz-Kennwörter werden, wie vorstehend bereits erwähnt wurde, benötigt, um den Inhalt der Leseschutzkennung verändern zu können. Um die Leseschutzkennung zu setzen oder zurückzusetzen, muß der Flashspeicher-Steuereinrichtung 5 das erste bzw. das zweite Leseschutz-Kennwort zugeführt werden. Die Flashspeicher-Steuereinrichtung 5 vergleicht das ihr zugeführte Kennwort mit den im Flashspeicher 4 gespeicherten Leseschutz-Kennwörtern. Wenn sich hierbei eine Übereinstimmung ergibt, setzt die Flashspeicher-Steuereinrichtung die Leseschutzkennung auf den gewünschten Wert.

Die Zuführung des Leseschutz-Kennwortes wird durch das von der programmgesteuerten Einheit ausgeführte Programm veranlaßt. Damit hat der Benutzer der programmgesteuerten Einheit die Möglichkeit, den Leseschutz zu aktivieren oder zu deaktivieren.

Die Leseschutzkennung weist die Besonderheit auf, daß sie zumindest dann, wenn sie schon einmal gesetzt war, nach jedem Rücksetzen der programmgesteuerten Einheit automatisch wieder gesetzt ist. D.h., ein Rücksetzen der Leseschutzkennung ist nur ein temporäres Rücksetzen, das nur bis zum Ausschalten oder Rücksetzen der programmgesteuerten Einheit wirkt.

Eine gesetzte Leseschutzkennung reicht allerdings noch nicht aus, um das Auslesen des Flashspeichers 4 zu verhindern.

Hierfür muß zusätzlich die in der Sperrkennungs-Speichereinrichtung 6 gespeicherte Sperrkennung gesetzt sein.

Die Sperrkennung wird
- automatisch beim Vorliegen oder Eintreten bestimmter Bedingungen, oder
- auf Veranlassung durch das von der programmgesteuerten Einheit ausgeführte Anwendungsprogramm
gesetzt.

Die Bedingungen, unter welchen die Sperrkennung automatisch gesetzt wird, bestehen darin, daß sich die programmgesteuerte Einheit in einer bestimmten Betriebsart befindet oder die programmgesteuerte Einheit in eine bestimmte Betriebsart wechselt.

Beim automatischen Setzen der Sperrkennung wird die Sperrkennung teilweise nur gesetzt, wenn auch die Leseschutzkennung gesetzt ist. Es ist jedoch selbstverständlich auch möglich, daß die Sperrkennung immer unabhängig oder immer abhängig vom Zustand der Leseschutzkennung gesetzt wird.

Die vorstehend erwähnten bestimmten Betriebsarten der programmgesteuerten Einheit sind solche Betriebsarten, in welchen es möglich ist, daß die programmgesteuerte Einheit von außerhalb der programmgesteuerten Einheit geholte Befehle ausführt. Dabei spielt es jedoch keine Rolle, ob die programmgesteuerte Einheit tatsächlich von außerhalb der programmgesteuerten Einheit geholte Befehle ausführt.

Im betrachteten Beispiel befindet sich die programmgesteuerte Einheit nach der Inbetriebnahme derselben in einer von fünf verschiedenen Betriebsarten. Diese fünf Betriebsarten sind
1) ein Normal-Start-Modus,
2) ein Bootstrap-Loader-Start-Modus,
3) ein Extern-Start-Modus,
4) Unkonfigurierter Start-Modus, und
5) ein Test-Modus.

In welcher Betriebsart sich die programmgesteuerte Einheit nach der Inbetriebnahme derselben befindet, wird durch die äußere Beschaltung bestimmter Ein- und/oder Ausgangsanschlüsse (Pins) der programmgesteuerten Einheit bestimmt.

Die programmgesteuerte Einheit enthält im betrachteten Beispiel eine Logik, durch welche basierend auf einer Überprüfung der die Betriebsart bestimmenden Pins entscheidet, ob die programmgesteuerte Einheit im unkonfigurierten Start-Modus oder in einer der anderen Betriebsarten starten soll. Diese Logik ist die Sperrkennungs-Einstelleinrichtung 7. Wenn die Sperrkennungs-Einstelleinrichtung 7 feststellt, daß die programmgesteuerte Einheit im unkonfigurierten Start-Modus gestartet werden soll, setzt sie die Sperrkennung und startet das (externe) Anwendungsprogramm.

Wenn die programmgesteuerte Einheit in einer der anderen Betriebsarten (nicht im unkonfigurierten Start-Modus) gestartet werden soll, wird mit der Ausführung eines in einem internen Speicher, vorzugsweise eines im internen ROM 2 gespeicherten, im folgenden als Startup-Programm bezeichneten Programmes begonnen. Dieses Startup-Programm
- überprüft durch eine Abfrage der die Betriebsart bestimmenden Pins, in welcher der anderen Betriebsarten die programmgesteuerte Einheit gestartet werden soll,
- setzt, wenn die hierfür zu erfüllenden Bedingungen erfüllt sind, die Sperrkennung, und
- veranlaßt die Ausführung des Anwendungsprogrammes.

Das Startup-Programm hat im betrachteten Beispiel auch noch weitere Aufgaben, beispielsweise das Starten und/oder das Einstellen der vorhandenen PLLs und Ladungspumpen. Da dies für den hier beschriebenen Leseschutz jedoch nicht von Bedeutung ist, wird von einer näheren Beschreibung abgesehen.

Sämtliche Aufgaben, die das Startup-Programm erfüllt, können auch durch eine entsprechende Logik (eine state machine) hardwaremäßig realisiert werden.

Im vorstehend erwähnten Normal-Start-Modus befindet sich das von der programmgesteuerten Einheit auszuführende Anwendungsprogramm in einem innerhalb der programmgesteuerten Einheit vorgesehenen nichtflüchtigen Speicher. In dieser Betriebsart hat ein Hacker keine Chance, Befehle in die programmgesteuerte Einheit einzuschleusen, durch welche der zu schützende Speicher ausgelesen werden kann. Das Startup-Programm setzt die Sperrkennung daher nicht.

Im Boostrap-Loader-Start-Modus wird nach der Ausführung des Startup-Programms (durch das Startup-Programm) ein Bootstrap Loader gestartet. Der Bootstrap Loader lädt von außerhalb der programmgesteuerten Einheit Befehle repräsentierende Daten in das RAM 3 der programmgesteuerten Einheit, und veranlaßt nach erfolgtem Laden dieser Befehle die Ausführung derselben. Weil in dieser Betriebsart von außerhalb der programmgesteuerten Einheit stammende Befehle zur Ausführung kommen, setzt das Startup-Programm dann, wenn auch die Leseschutzkennung gesetzt ist, die Sperrkennung. Der Vollständigkeit halber sei angemerkt, daß der Bootstrap-Loader-Start-Modus zur Umprogrammierung des Flashspeichers 4 einer schon in ein System eingebauten programmgesteuerten Einheit verwendet werden kann. Das durch den Bootstrap Loader in die programmgesteuerte Einheit geladene Programm enthält dann die Befehle, durch welche der Flashspeicher 4 entsprechend den Wünschen des Benutzer des Systems umprogrammiert wird. Die Umprogrammierung kann jedoch nur durch eine vom Hersteller des Systems dazu autorisierte Stelle erfolgen. Nur diese kennt das Schreibschutz-Kennwort, das dem Flashspeicher 4 (der dem Flashspeicher 4 vorgeschalteten Flashspeicher-Steuervorrichtung 5) zugeführt werden muß, damit ein Umprogrammieren des Flashspeichers 4 erfolgen kann. Eine autorisierte Stelle kann mittels des durch den Bootstrap Loader geladenen Programmes auch Daten aus dem Flashspeicher 4 auslesen. Zwar ist, wenn sowohl die Leseschutzkennung als auch die Sperrkennung gesetzt sind, der Leseschutz aktiv, doch kann durch einen oder mehrere Befehle, durch welche dem Flashspeicher 4 (der dem Flashspeicher 4 vorgeschalteten Flashspeicher-Steuervorrichtung 5) das Leseschutz-Kennwort zugeführt wird, die Leseschutzkennung und damit auch der Leseschutz zurückgesetzt werden. Da das Leseschutz-Kennwort Hackern nicht bekannt ist, sind diese hierzu nicht in der Lage.

Im Extern-Start-Modus, befindet sich das von der programmgesteuerten Einheit auszuführende Anwendungsprogramm in einem außerhalb der programmgesteuerten Einheit vorgesehenen Speicher. In dieser Betriebsart werden die von der programmgesteuerten Einheit auszuführenden Anwendungsprogramm-Befehle aus der externen Speicher geholt. Weil in dieser Betriebsart von außerhalb der programmgesteuerten Einheit stammende Befehle zur Ausführung kommen, setzt das vor dem Anwendungsprogramm ausgeführte Startup-Programm dann, wenn auch die Leseschutzkennung gesetzt ist, die Sperrkennung. Damit sind sowohl der Leseschutz als auch der Schreibschutz aktiv, so daß ein Hacker keine Chance hat, den Flashspeicher 4 auszulesen oder umzuprogrammieren.

Im unkonfigurierten Start-Modus befindet sich das von der programmgesteuerten Einheit auszuführende Anwendungsprogramm ebenfalls in einem außerhalb der programmgesteuerten Einheit vorgesehenen Speicher. In dieser Betriebsart wird ohne vorherige Ausführung des Startup-Programms sofort mit der Ausführung des externen Anwendungsprogramms begonnen. Weil in dieser Betriebsart von außerhalb der programmgesteuerten Einheit stammende Befehle zur Ausführung kommen, setzt die Sperrkennungs-Einstelleinrichtung 7, die feststellt, daß sich die programmgesteuerte Einheit in dieser Betriebsart befindet, die Sperrkennung. Ob die Leseschutzkennung gesetzt ist oder nicht, spielt in diesem Fall keine Rolle. Wenn die Leseschutzkennung gesetzt ist, sind sowohl der Leseschutz als auch der Schreibschutz aktiv, so daß ein Hacker auch in dieser Betriebsart keine Chance hat, den Flashspeicher 4 auszulesen oder umzuprogrammieren.

Im Test-Modus, in welchem, wie die Bezeichnung schon andeutet, die programmgesteuerte Einheit und/oder das diese enthaltende System getestet wird, wird durch das Startup-Programm die Sperrkennung gesetzt. Wenn die Leseschutzkennung gesetzt ist, sind sowohl der Leseschutz als auch der Schreibschutz aktiv, so daß ein Hacker auch in dieser Betriebsart keine Chance hat, den Flashspeicher 4 auszulesen oder umzuprogrammieren.

Ein Rücksetzen der Sperrkennung kann nur durch ein Rücksetzen oder durch ein Aus- und Einschalten der programmgesteuerten Einheit erfolgen.

Wenn ein Lesezugriff auf den Flashspeicher 4 erfolgt, überprüft die Flashspeicher-Steuereinrichtung 5, den Zustand der Leseschutzkennung und der Sperrkennung, und
- gestattet das Auslesen von Daten aus dem Flashspeicher 4, wenn die Leseschutzkennung und/oder die Sperrkennung nicht gesetzt ist, bzw.
- verhindert das Auslesen von Daten aus dem Flashspeicher 4, wenn sowohl die Leseschutzkennung als auch die Sperrkennung gesetzt ist.

Wenn das Auslesen von Daten aus dem Flashspeicher 4 gestattet ist (wenn der Leseschutz nicht aktiviert ist), leitet die Flashspeicher-Steuereinrichtung 5 die ihr zugeführte Adresse an den Flashspeicher 4 weiter, welcher daraufhin die unter dieser Adresse gespeicherten Daten ausgibt.

Wenn das Auslesen von Daten aus dem Flashspeicher 4 gesperrt ist (wenn der Leseschutz aktiviert ist), werden nicht die aus dem Flashspeicher 4 angeforderten Daten ausgegeben. Statt dessen werden bestimmte andere Daten ausgegeben und/oder eine Fehlermeldung (beispielsweise ein Trap) ausgegeben.

Vom Inhalt der Leseschutzkennung und/oder der Sperrkennung kann es auch abhängig gemacht werden, ob ein in der programmgesteuerten Einheit enthaltenes OCDS-Modul (On Chip Debug Support Modul) verwendet werden darf oder nicht. Um zu verhindern, daß der Flashspeicher 4 durch Befehle ausgelesen wird, die aus dem OCDS-Modul stammen, kann beispielsweise vorgesehen werden, daß sich das OCDS-Modul bei der Inbetriebnahme der programmgesteuerten Einheit im inaktiven Zustand befindet und durch das Startup-Programm oder durch das Anwendungsprogramm aktiviert werden muß, um verwendet werden zu können, wobei eine automatische Aktivierung durch das Startup-Programm beispielsweise vom Inhalt der Leseschutzkennung abhängig gemacht wird, und wobei dann, wenn das OCDS-Modul (egal auf welche Art und Weise) aktiviert wird, die Sperrkennung gesetzt wird.

Entsprechendes gilt für den Fall, daß die programmgesteuerte andere Einrichtungen enthält, die hierarchisch über der CPU stehen und Einfluß auf die innerhalb der programmgesteuerten Einheit herrschenden Zustände und ablaufenden Vorgänge nehmen können.

Bei der beschriebenen programmgesteuerten Einheit besteht keine Notwendigkeit mehr, die Adressen zu überprüfen, von welchen Befehle und/oder Operanden geholt werden, und es vom Ergebnis dieser Überprüfung abhängig zu machen, ob der Leseschutz zu aktivieren ist oder nicht. Nichtsdestotrotz kann aber dennoch eine solche Überprüfung durchgeführt werden, und das Ergebnis dieser Überprüfung als zusätzliche Bedingung oder anstelle einer anderen Bedingung für das Setzen und/oder Rücksetzen der Leseschutzkennung und/oder der Sperrkennung und/oder einer sonstigen Kennung, von welcher die Aktivierung oder die Deaktivierung des Leseschutzes abhängt, zu verwenden.

Die beschriebene programmgesteuerte Einheit läßt sich auf mannigfaltige Art und Weise modifizieren.

Beispielsweise kann vorgesehen werden, daß die Aktivierung und die Deaktivierung des Leseschutzes und/oder des Schreibschutzes nicht durch ein einziges Kennwort, sondern durch Kennwort-Sequenzen erfolgen.

Des weiteren kann vorgesehen werden, daß nicht nur eine Sperrkennung, sondern mehrere Sperrkennungen vorgesehen sind, beispielsweise
- eine Sperrkennung, die gesetzt wird, wenn von außerhalb der programmgesteuerten Einheit stammende Befehle ausgeführt werden oder werden können, und
- eine Sperrkennung, die gesetzt wird, wenn von außerhalb der programmgesteuerten Einheit stammende Operanden verwendet werden oder verwendet werden können,
   und/oder
- eine Sperrkennung, die berücksichtigt wird, wenn Befehle aus dem zu schützenden Speicher ausgelesen werden sollen, und ,
- eine Sperrkennung, die berücksichtigt wird, wenn Operanden aus dem zu schützenden Speicher ausgelesen werden sollen.

Die beschriebene programmgesteuerte Einheit ermöglicht es unabhängig von den Einzelheiten der praktischen Realisierung, das Auslesen von in der programmgesteuerten Einheit enthaltenen Speichern durch dazu nicht befugte Personen auf einfache Art und Weise unter allen Umständen zuverlässig zu verhindern.

## Patentansprüche

1. Programmgesteuerte Einheit mit einer Speichereinrichtung (4), und mit einer Leseschutzeinrichtung, durch welche das Auslesen von Daten aus der Speichereinrichtung (4) verhindert werden kann, wobei die Leseschutzeinrichtung das Auslesen von Daten aus der Speichereinrichtung (4) nur verhindert, wenn eine Sperrkennung gesetzt ist, und wobei die programmgesteuerte Einheit diese Sperrkennung automatisch in Abhängigkeit von der Betriebsart, in welcher sich die programmgesteuerte Einheit befindet, setzt oder nicht,
**dadurch gekennzeichnet,**
**daß** es von vor dem Starten der programmgesteuerten Einheit an bestimmte Anschlüsse der programmgesteuerten Einheit angelegten Signalen abhängt, in welcher Betriebsart die programmgesteuerte Einheit startet, und
**daß** die programmgesteuerte Einheit dafür sorgt, daß die Sperrkennung gesetzt ist, wenn sich die programmgesteuerte Einheit in einer Betriebsart befindet, in welcher es nicht verhindert werden kann, daß die programmgesteuerte Einheit von außerhalb der programmgesteuerten Einheit in die programmgesteuerte Einheit geladene Befehle ausführt.

2. Programmgesteuerte Einheit nach Anspruch 1,
**dadurch gekennzeichnet,**
**daß** die Speichereinrichtung (4), deren Auslesen durch die Leseschutzeinrichtung verhindert werden kann, ein nichtflüchtiger Speicher ist.

3. Programmgesteuerte Einheit nach Anspruch 1,
**dadurch gekennzeichnet,**
**daß** die programmgesteuerte Einheit dafür sorgt, daß die Sperrkennung gesetzt ist, wenn sich die programmgesteuerte Einheit in einer Betriebsart befindet, in welcher sie das von ihr auszuführende Anwendungsprogramm oder einen Teil desselben unter Verwendung eines Bootstrap Loaders von außerhalb der programmgesteuerten Einheit in einen internen Programmspeicher der programmgesteuerten Einheit transferiert und zu einem späteren Zeitpunkt ausführt.

4. Programmgesteuerte Einheit nach Anspruch 1,
**dadurch gekennzeichnet,**
**daß** die programmgesteuerte Einheit dafür sorgt, daß die Sperrkennung gesetzt ist, wenn sich die programmgesteuerte Einheit in einer Betriebsart befindet, in welcher sie die von ihr auszuführenden Befehle aus einer außerhalb der programmgesteuerten Einheit vorgesehenen Speichereinrichtung lädt.

5. Programmgesteuerte Einheit nach Anspruch 1,
**dadurch gekennzeichnet,**
**daß** die programmgesteuerte Einheit dafür sorgt, daß die Sperrkennung gesetzt ist, wenn sich die programmgesteuerte Einheit in einer Betriebsart befindet, in welcher die programmgesteuerte Einheit Testroutinen ausführt, durch welche die programmgesteuerte Einheit und/oder andere Komponenten des die programmgesteuerte Einheit enthaltenden Systems getestet werden.

6. Programmgesteuerte Einheit nach Anspruch 1,
**dadurch gekennzeichnet,**
**daß** die programmgesteuerte Einheit dafür sorgt, daß die Sperrkennung gesetzt ist, wenn sich die programmgesteuerte Einheit in einer Betriebsart befindet, in welcher in der programmgesteuerten Einheit vorhandene Einrichtungen aktiviert sind, die hierarchisch über der CPU stehen und Einfluß auf die innerhalb der programmgesteuerten Einheit herrschenden Zustände und ablaufenden Vorgänge nehmen können.

7. Programmgesteuerte Einheit nach einem der vorhergehenden Ansprüche,
**dadurch gekennzeichnet,**
**daß** der Inhalt der Sperrkennung durch ein Startup-Programm verändert wird, welches in einem nichtflüchtigen Speicher der programmgesteuerten Einheit gespeichert ist und vor der Ausführung des Anwendungsprogrammes ausgeführt wird.

8. Programmgesteuerte Einheit nach einem der Ansprüche 1 bis 6,
**dadurch gekennzeichnet,**
**daß** der Inhalt der Sperrkennung durch eine in der programmgesteuerten Einheit enthaltene Logik (7) verändert wird.

9. Programmgesteuerte Einheit nach einem der vorhergehenden Ansprüche,
**dadurch gekennzeichnet,**
**daß** die Sperrkennung abhängig vom Zustand bestimmter Ein- und/oder Ausgabeanschlüsse der programmgesteuerten Einheit gesetzt wird oder nicht.

10. Programmgesteuerte Einheit nach Anspruch 9,
**dadurch gekennzeichnet,**
**daß** die bestimmten Ein- und/oder Ausgabeanschlüsse der programmgesteuerten Einheit Ein- und/oder Ausgabeanschlüsse sind, über welche die Betriebsart der programmgesteuerten Einheit einstellbar ist.

11. Programmgesteuerte Einheit nach einem der vorhergehenden Ansprüche,
**dadurch gekennzeichnet,**
**daß** die Sperrkennung durch einen entsprechenden Befehl im Anwendungsprogramm gesetzt werden kann.

12. Programmgesteuerte Einheit nach einem der vorhergehenden Ansprüche,
**dadurch gekennzeichnet,**
**daß** die Sperrkennung beim Einschalten der programmgesteuerten Einheit nicht gesetzt ist.

13. Programmgesteuerte Einheit nach einem der vorhergehenden Ansprüche,
**dadurch gekennzeichnet,**
**daß** die Sperrkennung nur durch ein Ausschalten oder ein Rücksetzen der programmgesteuerten Einheit rückgesetzt werden kann.

14. Programmgesteuerte Einheit nach einem der vorhergehenden Ansprüche,
**dadurch gekennzeichnet,**
**daß** die Leseschutzeinrichtung das Auslesen von Daten aus der Speichereinrichtung (4) nur verhindert, wenn neben der Sperrkennung auch eine Leseschutzkennung gesetzt ist.

15. Programmgesteuerte Einheit nach Anspruch 14,
**dadurch gekennzeichnet,**
**daß** die Leseschutzkennung durch entsprechende Befehle im Anwendungsprogramm gesetzt oder rückgesetzt wird.

16. Programmgesteuerte Einheit nach Anspruch 14 oder 15,
**dadurch gekennzeichnet,**
**daß** der Inhalt der Leseschutzkennung nur verändert wird, wenn die Berechtigung hierzu nachgewiesen wird.

17. Programmgesteuerte Einheit nach Anspruch 16,
**dadurch gekennzeichnet,**
**daß** der Nachweis der Berechtigung durch die Übermittlung eines bestimmten Kennwortes zu erbringen ist.

18. Programmgesteuerte Einheit nach Anspruch 17,
**dadurch gekennzeichnet,**
**daß** der Inhalt der Leseschutzkennung nur verändert wird, wenn das übermittelte Kennwort mit einem in einem nichtflüchtigen Speicher der programmgesteuerten Einheit gespeicherten Kennwort übereinstimmt.

19. Programmgesteuerte Einheit nach einem der Ansprüche 14 bis 18,
**dadurch gekennzeichnet,**
**daß** die Leseschutzkennung zumindest dann, wenn sie vorher schon einmal gesetzt war, nach der Inbetriebnahme oder einem Rücksetzen der programmgesteuerten Einheit automatisch gesetzt ist.

20. Programmgesteuerte Einheit nach einem der Ansprüche 14 bis 19,
**dadurch gekennzeichnet,**
**daß** die Sperrkennung nur gesetzt wird, wenn die Leseschutzkennung gesetzt ist.

21. Programmgesteuerte Einheit nach einem der vorhergehenden Ansprüche,
**dadurch gekennzeichnet,**
**daß** dann, wenn bei aktiviertem Leseschutz versucht wird, Daten aus der zu schützenden Speichereinrichtung (4) auszulesen, nicht die angeforderten Daten, sondern bestimmte andere Daten ausgegeben werden.

22. Programmgesteuerte Einheit nach einem der vorhergehenden
**dadurch gekennzeichnet,**
**daß** dann, wenn bei aktiviertem Leseschutz versucht wird, Daten aus der zu schützenden Speichereinrichtung (4) auszulesen, eine Fehlermeldung ausgegeben wird.

## Claims

1. Programme-controlled unit with a storage device (4) and with a read-protection device by means of which the reading of data from the storage device (4) can be prevented, wherein the read-protection device only prevents the reading of data from the storage device (4) when a blocking code is set, and wherein the programme-controlled unit automatically sets or does not set this blocking code in dependence on the operating mode in which the programme-controlled unit is, **characterized in that** it depends on signals applied to particular terminals of the programme-controlled unit before starting the programme-controlled unit in what operating mode the programme-controlled unit starts, and that the programme-controlled unit ensures that the blocking code is set if the programme-controlled unit is in an operating mode in which it cannot be prevented that the programme-controlled unit executes commands loaded into the programme-controlled unit from outside the programme-controlled unit.

2. Programme-controlled unit according to Claim 1, **characterized in that** the storage device (4), the reading-out of which can be prevented by the read-protection device, is a non-volatile memory.

3. Programme-controlled unit according to Claim 1, **characterized in that** the programme-controlled unit ensures that the blocking code is set if the programme-controlled unit is in an operating mode in which it transfers the application programme to be executed by it, or a part thereof, from outside the programme-controlled unit into an internal programme memory of the programme-controlled unit by using a bootstrap loader and executes it at a later time.

4. Programme-controlled unit according to Claim 1, **characterized in that** the programme-controlled unit ensures that the blocking code is set if the programme-controlled unit is in an operating mode in which it loads the commands to be executed by it from a storage device provided outside the programme-controlled unit.

5. Programme-controlled unit according to Claim 1, **characterized in that** the programme-controlled unit ensures that the blocking code is set if the programme-controlled unit is in an operating mode in which the programme-controlled unit executes test routines by means of which the programme-controlled unit and/or other components of the system containing the programme-controlled unit are tested.

6. Programme-controlled unit according to Claim 1, **characterized in that** the programme-controlled unit ensures that the blocking code is set if the programme-controlled unit is in an operating mode in which devices existing in the programme-controlled unit are activated which are hierarchically above the CPU and can influence the states prevailing within the programme-controlled unit and processes in progress.

7. Programme-controlled unit according to one of the preceding claims, **characterized in that** the content of the blocking code is changed by a start-up programme which is stored in a non-volatile memory of the programme-controlled unit and is executed before the execution of the application programme.

8. Programme-controlled unit according to one of Claims 1 to 6, **characterized in that** the content of the blocking code is changed by a logic (7) contained in the programme-controlled unit.

9. Programme-controlled unit according to one of the preceding claims, **characterized in that** the blocking code is set or not in dependence on the state of particular input and/or output terminals of the programme-controlled unit.

10. Programme-controlled unit according to Claim 9, **characterized in that** the particular input and/or output terminals of the programme-controlled unit are input and/or output terminals via which the operating mode of the programme-controlled unit can be set.

11. Programme-controlled unit according to one of the preceding claims, **characterized in that** the blocking code can be set by a corresponding command in the application programme.

12. Programme-controlled unit according to one of the preceding claims, **characterized in that** the blocking code is not set when the programme-controlled unit is switched on.

13. Programme-controlled unit according to one of the preceding claims, **characterized in that** the blocking code can only be reset by switching off or resetting the programme-controlled unit.

14. Programme-controlled unit according to one of the preceding claims, **characterized in that** the read-protection device only prevents the reading of data from the storage device (4) if, in addition to the blocking code, a read-protection code is also set.

15. Programme-controlled unit according to Claim 14, **characterized in that** the read-protection code is set or reset by corresponding commands in the application programme.

16. Programme-controlled unit according to Claim 14 or 15, **characterized in that** the content of the read-protection code is only changed if the authorization for this is verified.

17. Programme-controlled unit according to Claim 16, **characterized in that** the verification of the authorization is produced by transmitting a particular codeword.

18. Programme-controlled unit according to Claim 17, **characterized in that** the content of the read-protection code is only changed if the transmitted codeword corresponds to a codeword stored in a non-volatile memory of the programme-controlled unit.

19. Programme-controlled unit according to one of Claims 14 to 18, **characterized in that** the read-protection code is automatically set after the start-up or a resetting of the programme-controlled unit, at least if it has previously already been set once.

20. Programme-controlled unit according to one of Claims 14 to 19, **characterized in that** the blocking code is only set if the read-protection code is set.

21. Programme-controlled unit according to one of the preceding claims, **characterized in that** if it is attempted to read data from the storage device (4) to be protected when the read-protection is activated, it is not the requested data but particular other data which are output.

22. Programme-controlled unit according to one of the preceding claims, **characterized in that** an error message is output if it is attempted to read data from the storage device (4) to be protected when the read-protection is activated.

## Revendications

1. Unité contrôlée par programme comportant un système de mémoire (4) et un système de protection de lecture permettant d'empêcher la lecture de données dans le système de mémoire (4), le système de protection de lecture n'empêchant la lecture de données dans le système de mémoire (4) que lorsqu'un indicatif de blocage est activé et l'unité contrôlée par programme activant ou non automatiquement cet indicatif de blocage en fonction du mode de fonctionnement dans lequel se trouve l'unité contrôlée par programme,
**caractérisée en ce que**
le mode de fonctionnement dans lequel démarre l'unité contrôlée par programme dépend de signaux appliqués avant le démarrage de l'unité contrôlée par programme à certains raccordements de l'unité contrôlée par programme et **en ce que** l'unité contrôlée par programme veille à ce que l'indicatif de blocage soit activé lorsque l'unité contrôlée par programme se trouve dans un mode de fonctionnement dans lequel on ne peut pas empêcher que l'unité contrôlée par programme exécute des instructions chargées depuis l'extérieur de l'unité contrôlée par programme dans l'unité contrôlée par programme.

2. Unité contrôlée par programme selon la revendication 1,
**caractérisée en ce que**
le système de mémoire (4) dont la lecture peut être empêchée par le système de protection de lecture est une mémoire non volatile.

3. Unité contrôlée par programme selon la revendication 1,
**caractérisée en ce que**
l'unité contrôlée par programme veille à ce que l'indicatif de blocage soit activé lorsque l'unité contrôlée par programme se trouve dans un mode de fonctionnement dans lequel elle transfère le programme d'application qu'elle doit exécuter ou une partie de celui-ci en utilisant un programme d'amorçage depuis l'extérieur de l'unité contrôlée par programme dans une mémoire de programme interne de l'unité contrôlée par programme et l'exécute ultérieurement.

4. Unité contrôlée par programme selon la revendication 1,
**caractérisée en ce que**
l'unité contrôlée par programme veille à ce que l'indicatif de blocage soit activé lorsque l'unité contrôlée par programme se trouve dans un mode de fonctionnement dans lequel elle charge les instructions qu'elle doit exécuter à partir d'un système de mémoire prévu à l'extérieur de l'unité contrôlée par programme.

5. Unité contrôlée par programme selon la revendication 1,
**caractérisée en ce que**
l'unité contrôlée par programme veille à ce que l'indicatif de blocage soit activé lorsque l'unité contrôlée par programme se trouve dans un mode de fonctionnement dans lequel l'unité contrôlée par programme exécute des routines de test qui permettent de tester l'unité contrôlée par programme et/ou d'autres composants du système contenant l'unité contrôlée par programme.

6. Unité contrôlée par programme selon la revendication 1,
**caractérisée en ce que**
l'unité contrôlée par programme veille à ce que l'indicatif de blocage soit activé lorsque l'unité contrôlée par programme se trouve dans un mode de fonctionnement dans lequel sont activés des dispositifs présents dans l'unité contrôlée par programme, qui sont situés hiérarchiquement au dessus de l'unité centrale et peuvent avoir une influence sur les états régnant au sein de l'unité contrôlée par programme et les opérations se déroulant.

7. Unité contrôlée par programme selon une des revendications précédentes,
**caractérisée en ce que**
le contenu de l'indicatif de blocage est modifié par un programme de démarrage qui est sauvegardé dans une mémoire non volatile de l'unité contrôlée par programme et est exécuté avant l'exécution du programme d'application.

8. Unité contrôlée par programme selon une des revendications 1 à 6,
**caractérisée en ce que**
le contenu de l'indicatif de blocage est modifié par une logique (7) incluse dans l'unité contrôlée par programme.

9. Unité contrôlée par programme selon une des revendications précédentes,
**caractérisée en ce que**
l'indicatif de blocage est activé ou non en fonction de l'état de certains raccordements de saisie et/ou d'édition de l'unité contrôlée par programme.

10. Unité contrôlée par programme selon la revendication 9,
**caractérisée en ce que**
lesdits certains raccordements de saisie et/ou d'édition de l'unité contrôlée par programme sont des raccordements de saisie et/ou d'édition permettant de régler le mode de fonctionnement de l'unité contrôlée par programme.

11. Unité contrôlée par programme selon une des revendications précédentes,
**caractérisée en ce que**
l'indicatif de blocage peut être activé dans le programme d'application par le biais d'une instruction correspondante.

12. Unité contrôlée par programme selon une des revendications précédentes,
**caractérisée en ce que**
l'indicatif de blocage n'est pas activé à l'activation de l'unité contrôlée par programme.

13. Unité contrôlée par programme selon une des revendications précédentes,
**caractérisée en ce que**
l'indicatif de blocage peut être réinitialisé seulement par une désactivation ou une réinitialisation de l'unité contrôlée par programme.

14. Unité contrôlée par programme selon une des revendications précédentes,
**caractérisée en ce que**
le système de protection de lecture n'empêche la lecture de données dans le dispositif de mémoire (4) que si, outre l'indicatif de blocage, un indicatif de protection de lecture est également activé.

15. Unité contrôlée par programme selon la revendication 14,
**caractérisée en ce que**
l'indicatif de protection de lecture est activé ou réinitialisé par le biais d'instructions correspondantes dans le programme d'application.

16. Unité contrôlée par programme selon la revendication 14 ou 15,
**caractérisée en ce que**
le contenu de l'indicatif de protection de lecture n'est modifié que si l'autorisation pour ce faire est prouvée.

17. Unité contrôlée par programme selon la revendication 16,
**caractérisée en ce que**
la preuve de l'autorisation doit être apportée par la transmission d'un certain mot de passe.

18. Unité contrôlée par programme selon la revendication 17,
**caractérisée en ce que**
le contenu de l'indicatif de protection de lecture n'est modifié que si le mot de passe transmis coïncide avec un mot de passe enregistré dans une mémoire non volatile de l'unité contrôlée par programme.

19. Unité contrôlée par programme selon une des revendications 14 à 18,
**caractérisée en ce que**
l'indicatif de protection de lecture est activé automatiquement, du moins lorsqu'il a déjà été activé une fois préalablement, après la mise en marche ou une réinitialisation de l'unité contrôlée par programme.

20. Unité contrôlée par programme selon une des revendications 14 à 19,
**caractérisée en ce que**
l'indicatif de blocage n'est activé que si l'indicatif de protection de lecture est activé.

21. Unité contrôlée par programme selon une des revendications précédentes,
**caractérisée en ce que**,
lorsqu'on essaie, la protection de lecture étant activée, de lire des données dans le dispositif de mémoire à protéger (4), ce ne sont pas les données demandées mais certaines autres données qui sont éditées.

22. Unité contrôlée par programme selon une des revendications précédentes,
**caractérisée en ce que**,
lorsqu'on essaie, la protection de lecture étant activée, de lire des données dans le dispositif de mémoire à protéger (4), un message d'erreur est édité.
